# EUROPÄISCHE PATENTSCHRIFT

(11) **EP 3 950 271 B1**
(45) Veröffentlichungstag und Bekanntmachung des Hinweises auf die Patenterteilung: **27.09.2023**
(21) Anmeldenummer: 21188860.7
(22) Anmeldetag: 30.07.2021
(51) Int. Cl.: B29C 55/06, B29C 51/18, B29C 51/26, B29C 55/02, B65B 3/02, B65B 7/16, B65B 9/04

(54) **FOLIENKLEMMUNG**
FILM CLAMPING
ÉLÉMENT DE SERRAGE DU FILM

(30) Priorität: 04.08.2020 DE 102020209819
(43) Veröffentlichungstag der Anmeldung: 09.02.2022
(73) Patentinhaber: MULTIVAC Sepp Haggenmüller SE & Co. KG, 87787 Wolfertschwenden (DE)
(72) Erfinder: PATZ, Dominik, 87435 Kempten (DE); KOVACS, Peter, 87700 Memmingen (DE)
(74) Vertreter: Grünecker Patent- und Rechtsanwälte PartG mbB

(56) Entgegenhaltungen:
- DE-A1- 2 349 475
- DE-A1- 3 039 616
- DE-A1-102010 048 977
- US-A- 3 762 125

## Beschreibung

Die Erfindung bezieht sich auf eine Tiefziehverpackungsmaschine zum Recken einer Folienbahn gemäß Anspruch 1.

Aus der DE 103 19 420 A1 ist eine Tiefziehverpackungsmaschine mit einer Dehnvorrichtung zum Dehnen einer Deckelfolie bekannt, um die bedruckte Deckelfolie exakt auf einer Verpackungsmulde zu positionieren. Dabei ermittelt eine Fotozelle mittels einer Druckmarke auf der Deckelfolie die Lage des Druckbildes gegenüber dem Vorschub und somit der Verpackungsmulde. Das Druckbild hat üblicherweise ein Untermaß und wird gedehnt, indem ein Klemmmittel, das in Form eines aufblasbaren Schlauchs vorliegt, die flexible Deckelfolie kurz vor Vorschubende klemmt und die verbleibende Vorschubbewegung die Deckelfolie dehnt. Zusätzlich kann das Klemmmittel entgegen der Vorschubrichtung verfahren werden, um die Deckelfolie auf das gewünschte Maß zu dehnen. Ein derartiger Reckvorgang, insbesondere das Einklemmen der Folienbahn, hat sich allerdings wegen seiner Abhängigkeit von der Vorschubbewegung als schwierig erwiesen.

Aus der DE 10 2010 048 977 A1 ist eine Tiefziehverpackungsmaschine mit einer Reckstation bekannt, an welcher die Deckelfolie unabhängig von einem Vorschub der Verpackungsmulden gedehnt werden kann. Zum Recken der Deckelfolie wird zunächst die Folienbahn innerhalb der Reckstation zwischen oberen Klemmbalken und diesen zugeordneten, darunter positionierten Umlenkrollen eingeklemmt. Anschließend werden der in Transportrichtung hintere Klemmbalken zusammen mit der darunter positionierten Umlenkrolle entgegen der Folientransportrichtung geschwenkt. Durch das Andrücken des schwenkbaren Klemmbalkens an die darunter positionierte Umlenkrolle kann es sein, dass entlang eines Klemmbereichs der Folienbahn eine Flächenpressung auf die Folienbahn ungleichmäßig ausgeübt wird, was zur Folge haben kann, dass beim Reckvorgang das Druckbild auf der Folienbahn geringfügig verzerrt wird.

DE 30 39 616 A1 offenbart eine Streckvorrichtung mit federnd gelagerten Klemmstücken zum Einklemmen einer Folienbahn für einen Streckvorgang.

DE 23 49 475 A1 offenbart eine Reckvorrichtung mit einer Anpressrolle und einer Blockierungstrommel zum Klemmen von Enden eines Folienbahnabschnitts. Ferner umfasst die Reckvorrichtung eine Plattenanordnung, die zum Aufheizen und Kühlen des geklemmten Folienbahnabschnitts zum Einsatz kommt.

US 3 762 125 A offenbart eine Reckstation mit in Transportrichtung einer Folienbahn beabstandeten Rollenanordnungen, die zum Klemmen und zum Dehnen der Folienbahn ansteuerbar sind.

Aufgabe der Erfindung ist es, eine Tiefziehverpackungsmaschine zum Einklemmen einer Folienbahn zur Verfügung zu stellen, bei welcher geringer Krafteinleitung und rutschfesteres Einklemmen gewährleistet wird und die vorstehend beschriebenen Nachteile beseitigt werden können.

Diese Aufgabe wird gelöst durch eine Tiefziehverpackungsmaschine zum Einklemmen einer Folienbahn gemäß Anspruch 1. Vorteilhafte Weiterbildungen der Erfindung sind in den Unteransprüchen angegeben.

Eine erfindungsgemäße Tiefziehverpackungsmaschine umfasst eine Reckstation mit einer ersten Klemmeinrichtung zum Einklemmen einer Folienbahn, wobei die erste Klemmeinrichtung ein erstes Klemmmittel und ein zweites Klemmmittel aufweist, die zum Einklemmen der Folienbahn entlang eines Klemmbereichs aneinanderdrückbar gelagert sind. Erfindungsgemäß sind beim Aneinanderdrücken der beiden Klemmelemente am ersten Klemmelement mittels eines Krafterzeugers eine Kraft derart einleitbar und das zweite Klemmelement derart gelagert, dass zumindest entlang des Klemmbereichs zum Einklemmen der Folienbahn sowohl im ersten als auch im zweiten Klemmelement Druck- und Zugspannungen auftreten. Damit lässt sich über den gesamten Klemmbereich hinweg eine gleichmäßige, zumindest in hohem Maße konstante Flächenpressung auf die eingeklemmte Folienbahn ausüben, um diese optimal zwischen dem ersten und dem zweiten Klemmelement zu fixieren.

Mit anderen Worten lässt sich bei der Erfindung die elastische Verformung des ersten und zweiten Klemmelements dazu ausnutzen, die dazwischen eingeklemmte Folienbahn mittels konstanter Flächenpressung im Klemmbereich festzuhalten, wodurch ein Reckvorgang der Folienbahn insgesamt mit erhöhter Genauigkeit ausgeführt werden kann.

In einer vorteilhaften Ausführung weisen beim Aneinanderdrücken der beiden Klemmelemente zum Einklemmen der Folienbahn beide Klemmelemente eine identische oder vergleichbare Durchbiegung auf. Insbesondere ist dies dadurch gegeben, dass die jeweilige neutrale Faser der beiden Klemmelemente den gleichen Biegeradius aufweisen. Das Ausmaß der Durchbiegung beider Klemmelemente kann dabei derart ausgeübt werden, dass die Flächenpressung auf die dazwischen eingeklemmte Folienbahn zumindest im Klemmbereich konstant ist, sprich auch über deren Ränder hinaus anliegen kann.

Vorstellbar ist es, dass der Krafterzeuger dazu konfiguriert ist, eine Kraft mit ungefähr 2,5kN zu erzeugen, sodass sich an den beiden Klemmelementen eine Durchbiegung von ungefähr 0,1mm ergibt. Dadurch kann im Klemmbereich der aneinandergedrückten Klemmelemente eine konstante Flächenpressung von zirka 1 N/mm² erzeugt werden. Als Klemmelemente könnten zwei Aluminiumbalkenprofile mit jeweils 400 x 40 x 20 mm eingesetzt werden, wobei eines davon einen Lagerabstand von 340 mm vorsieht.

Erfindungsgemäß umfasst das erste Klemmelement einen ersten Balken und das zweite Klemmelement einen zweiten Balken. In Form eines Balkens können die jeweiligen Klemmelemente zum Einklemmen der Folienbahn unter geringem Kraftaufwand präzise gebogen werden. Anhand der doppelten Balkengeometrie ergibt sich auch ein einfacher konstruktiver Aufbau.

Die Erfindung sieht vor, dass beim Aneinanderdrücken der beiden Klemmelemente die dabei auf das erste Klemmelement einwirkende Kraft im Wesentlichen mittig hinsichtlich eines Abstands zwischen einem ersten und einem zweiten Lagerort des zweiten Klemmelements einleitbar ist. Die Krafteinleitung findet also hinsichtlich beider Klemmelemente mittig statt, sodass die beiden Lager gleichmäßig belastet werden. Damit lässt sich insgesamt eine identische oder vergleichbare Durchbiegung an den jeweiligen Klemmelementen erreichen, wodurch das Einklemmen der Folienbahn mittels konstanter Flächenpressung möglich ist.

Erfindungsgemäß weisen die beiden Klemmelemente zum Einklemmen der Folienbahn auf ihren jeweiligen einander zugewandten Seiten mindestens ein elastisches Andrückelement auf. Damit kann die Folienbahn zwischen den beiden Klemmelementen unter geringer Krafteinleitung rutschfest eingeklemmt werden.

Eine für den erfindungsgemäßen Einsatz vorteilhafte Anordnung sieht vor, dass an der Reckstation das erste Klemmelement oberhalb des zweiten Klemmelements positioniert ist. Die zum Einklemmen der Folienbahn eingesetzte Kraft kann von oben auf das erste Klemmelement drücken, um die beiden aneinandergerückten Klemmelemente gemeinsam nach unten durchzubiegen. Alternativ könnte das erste Klemmelement auch unterhalb des zweiten Klemmelements positioniert sein. Zum Einklemmen der Folienbahn könnte dann die Kraft von unten gegen das erste Klemmelement drücken, um beide Klemmelemente nach oben durchzubiegen.

Eine bevorzugte Variante sieht vor, dass mit dem ersten und/oder zweiten Klemmelement mindestens eine Sensoreinheit zum Bestimmen einer Biegespannung gekoppelt ist. Anhand der damit erfassbaren Biegespannung am ersten und/oder zweiten Klemmelement kann mittels Rücckopplung der Krafterzeuger gesteuert sein, um eine gewünschte Durchbiegung der beiden Klemmelemente zu erreichen, so dass eine konstante Flächenpressung an der Folienbahn vorliegt.

Gemäß einer vorteilhaften Ausführungsform weist die Reckstation eine mit der ersten Klemmeinrichtung zusammenarbeitende, zweite Klemmeinrichtung auf, deren Aufbau und/oder Funktionsweise zum Einklemmen der Folienbahn vergleichbar ist. Die jeweiligen Klemmeinrichtungen können insbesondere derart betrieben werden, dass ein Recken der Folienbahn unabhängig von einem Vorschub der entlang der Tiefziehverpackungsmaschine transportierten Verpackungsmulden stattfindet.

Vorteilhaft ist es, wenn die Reckstation für die erste und/oder die zweite Klemmeinrichtung eine Eingriffsschutzeinrichtung aufweist. Damit lassen sich Arbeitsunfälle vermeiden.

Vorzugsweise ist die erste und/oder die zweite Klemmeinrichtung für einen Reckvorgang um eine Schwenkachse kippbar gelagert, die zu den jeweiligen Klemmelementen beabstandet ist. Damit ist es möglich, bereits mittels einer geringen Schwenkbewegung eine ausreichende Dehnbewegung für das Recken der Folienbahn zu erreichen.

Zweckmäßig ist es, wenn die beiden Klemmelemente eine identische oder vergleichbare Balkengeometrie aufweisen. Dies ermöglicht eine kompakte Bauweise und dient der Reduzierung der Herstellungskosten. Eine Variante sieht vor, dass die beiden Klemmelemente jeweils in Form eines Balkens vorliegen, der mit 400 x 40 x 20 mm dimensioniert ist. Einer der beiden Balken kann an gegenüberliegenden Enden gelagert sein, wobei ein Lagerabstand vorzugsweise 340 mm beträgt.

Vorzugsweise haben die beiden Klemmelemente zumindest im Wesentlichen dieselben mechanischen Biegeeigenschaften, insbesondere dasselbe E-Modul. Damit kann davon ausgegangen werden, dass Wartungs- und/oder Servicearbeiten an den beiden Klemmelementen zur selben Zeit stattfinden können. Außerdem lässt sich dadurch beim Einklemmen der Folienbahn zuverlässig eine konstante Flächenpressung im Klemmbereich herstellen. Zweckmäßig ist es, wenn das E-Modul im Bereich zwischen 50 und 150 kN/mm² liegt, vorzugsweise 70kN/mm² (Aluminium) beträgt.

Vorzugsweise ist die mittels des Krafterzeugers auf das erste Klemmelement ausgeübte Kraft an einer einzelnen Stelle, d.h. punktuell am Klemmelement, einleitbar. Dies ermöglicht einen in konstruktiver sowie technischer Hinsicht einfachen Aufbau. Aufgrund der Fähigkeit der beiden Klemmelemente, sich in Reaktion auf die Krafteinleitung gemeinsam durchzubiegen, kann trotz reduzierter, punktueller Krafteinleitung insgesamt über den gesamten Klemmbereich hinweg eine gleichmäßigere Flächenpressung auf die eingeklemmte Folienbahn ausgeübt werden, als dies bei herkömmlichen Lösungen der Fall ist.

Eine bevorzugte Variante sieht vor, dass der erste Klemmbereich höhenverstellbar gelagert ist. Das erste Klemmelement kann, insbesondere in Form eines Balkens, mittig an einem vertikal verstellbaren Kolben des Krafterzeugers montiert sein.

An den jeweiligen Lagerorten des zweiten Klemmelements können Festlager und/oder Gleitlager oder alternativ eine Kombination daraus vorgesehen sein, um die Biegung des zweiten Klemmelements auf das erste Klemmelement zu übertragen, wenn das erste Klemmelement von unten oder von oben gegen das zweite Klemmelement gedrückt wird.

Ein Verfahren zum Einklemmen einer Folienbahn mittels einer Klemmeinrichtung an einer Reckstation einer Tiefziehverpackungsmaschine sieht vor, dass ein erstes Klemmelement und ein zweites Klemmelement der Klemmeinrichtung aneinandergedrückt werden, um dazwischen die Folienbahn entlang eines Klemmbereichs einzuklemmen. Dabei treten beim Aneinanderdrücken der beiden Klemmelemente entlang des Klemmbereichs sowohl im ersten als auch im zweiten Klemmelement Druck- und Zugspannungen auf.

Beim Verfahren können zum Einklemmen der Folienbahn die beiden Klemmelemente derart aneinandergedrückt werden, dass sie sich gemeinsam im Wesentlichen identisch durchbiegen, so dass die dazwischen eingeklemmte Folienbahn entlang des Klemmbereichs eine konstante Flächenpressung erfährt. Dies hat zur Folge, dass die Folienbahn über ihre gesamte Breite gleichmäßig fixiert werden kann, wodurch ein Recken der Folienbahn mit noch höherer Genauigkeit möglich ist.

Die im Zusammenhang mit der erfindungsgemäßen Tiefziehverpackungsmaschine sowie mit dem Verfahren eingesetzte Folienklemmung nutzt eine elastische Durchbiegung der beiden Klemmelemente aus, um dazwischen entlang eines Klemmbereichs die Folienbahn mittels konstanter Flächenpressung einzuklemmen. Eine ansonsten, bei herkömmlichen Verfahren, für nachteilig erachtete elastische Verformung wird daher bei der vorliegenden Erfindung in vorteilhafter Weise dafür eingesetzt, die Folienbahn mittels konstanter Flächenpressung einzuklemmen. Bei der Erfindung kann daher eine in konstruktiver Hinsicht eigentlich nachteilig gebaute Kraftlagereinrichtung der beiden Klemmelemente das Ausüben einer konstanten Flächenpressung auf die Folienbahn begünstigen.

Demzufolge nimmt die Erfindung eine vermeintlich nachteilige Kraftlagerkonstruktion der Klemmeinrichtung in Kauf, um anhand der damit einhergehenden Balkenbiegung ein verbessertes Einklemmen der Folienbahn zu erreichen. Das Zusammenwirken der beiden aneinandergedrückten und gemeinsam durchgebogenen Klemmbalken wird erfindungsgemäß als vorteilhafter Greifer zum Klemmen der Folienbahn eingesetzt.

Im Folgenden wird die Erfindung anhand von Figuren genauer beschrieben. Dabei zeigen:
- Fig. 1: eine perspektivische Darstellung einer Tiefziehverpackungsmaschine,
- Fig. 2: eine Reckstation der Tiefziehverpackungsmaschine aus Fig. 1 in isolierter Darstellung,
- Fig. 3: eine Klemmeinrichtung der Reckstation in isolierter Darstellung,
- Fig. 4: eine Klemmeinrichtung der Reckstation mit einseitig abgenommenem Eingriffsschutz zur besseren Darstellung der Klemmelemente,
- Fig. 5A - E: das Einklemmen sowie Durchführen eines Reckvorgangs in schematischer Darstellung, und
- Fig. 6A - D: eine schematische Darstellung des Aneinanderdrückens der Klemmelemente zum Ausüben einer zumindest in hohem Maße konstanten Flächenpressung auf eine dazwischen eingespannte Folienbahn.

Gleiche und ähnliche Komponenten sind in den Figuren durchgängig mit gleichen Bezugszeichen versehen.

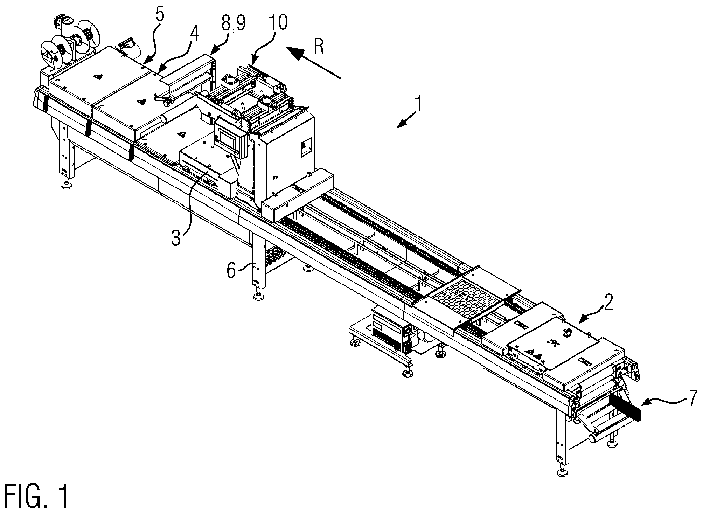

Fig. 1 zeigt in perspektivischer Ansicht eine Tiefziehverpackungsmaschine 1. Diese weist eine Formstation 2, eine Siegelstation 3, eine Querschneideeinrichtung 4 und eine Längsschneideeinrichtung 5, die in dieser Reihenfolge in einer Arbeitsrichtung R an einem Maschinengestell 6 angeordnet sind. Eingangsseitig befindet sich an dem Maschinengestell 6 eine Zufuhrrolle 7, von der eine Unterfolie abgezogen werden kann. In der Formstation 2 wird in die Unterfolie eine Packungsmulde geformt. Im Bereich der Siegelstation 3 ist ein Materialspeicher 8 vorgesehen, von dem eine Folienbahn 9 abgezogen wird, die an fertig hergestellten Verpackungen die Deckelfolie ausbildet. Vor dem Zuführen der Folienbahn 9 in die Siegelstation 3 durchläuft die Folienbahn 9 eine Reckstation 10. Die Reckstation 10, die im Bereich oberhalb der Siegelstation 3 angeordnet ist, dient zum Dehnen der Folienbahn 9.

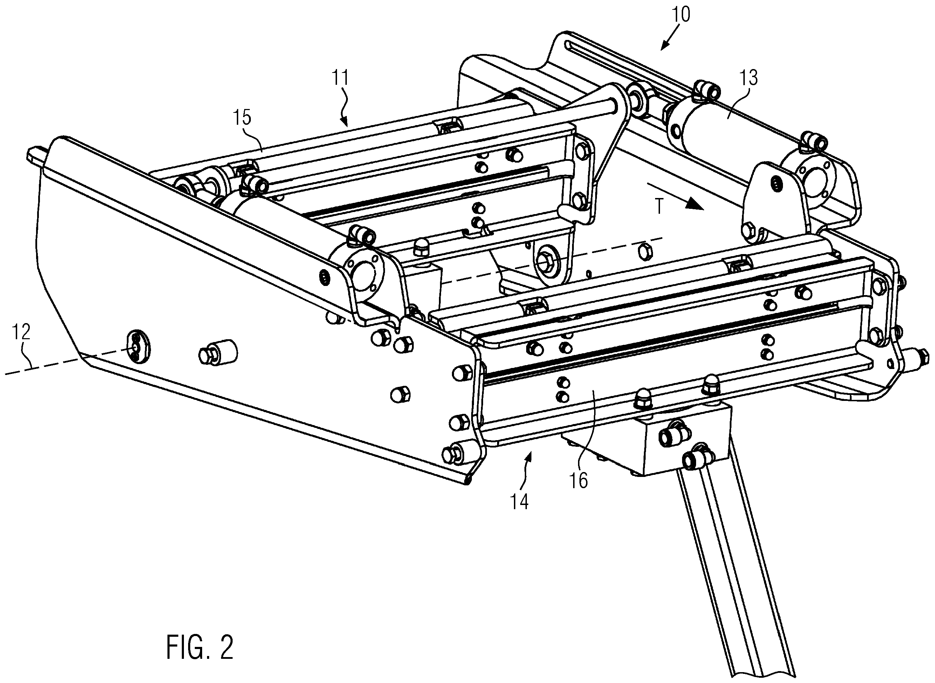

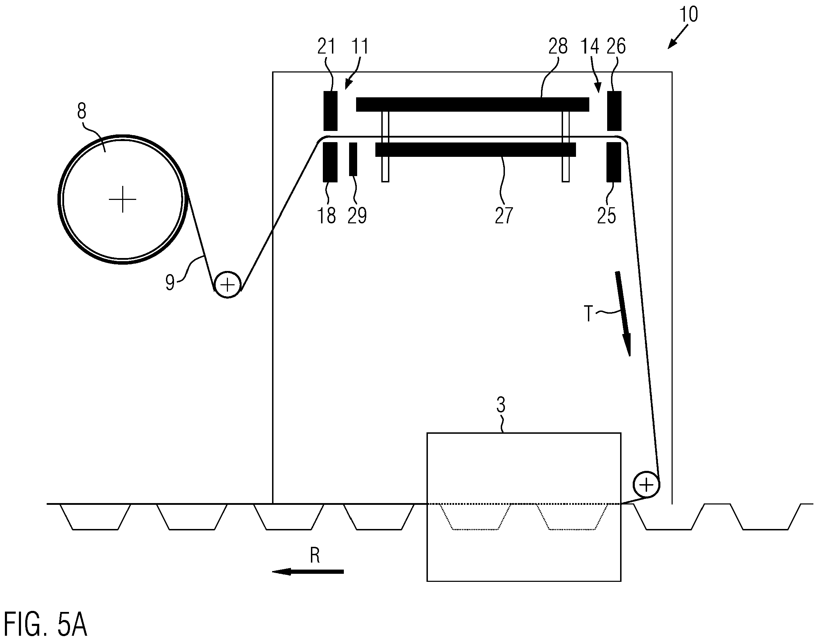

Fig. 2 zeigt die Reckstation 10 in isolierter Darstellung. Die Reckstation 10 weist eine erste Klemmeinrichtung 11 zum Einklemmen der Folienbahn 9 auf. Die erste Klemmeinrichtung 11 ist an der Reckstation 10 um eine Schwenkachse 12 schwenkbar gelagert. Die erste Klemmeinrichtung 11 kann mittels beidseitig an der Reckstation 10 angeordneten Verstelleinrichtungen 13 entgegen einer Transportrichtung T (siehe Fig. 5A) der Folienbahn 9 um die Schwenkachse 12 geschwenkt werden, um die daran eingeklemmte Folienbahn 9 zu dehnen. Die jeweiligen Verstelleinrichtungen 13 können als Pneumatikantriebe ausgebildet sein.

Die Reckstation 10 aus Fig. 2 verfügt ferner über eine zweite Klemmeinrichtung 14, die in Transportrichtung T der Folienbahn 9 stromabwärts der ersten Klemmeinrichtung 11 gelagert ist. Sowohl die erste Klemmeinrichtung 11 als auch die zweite Klemmeinrichtung 14 weisen eine Eingriffsschutzeinrichtung 15, 16 auf.

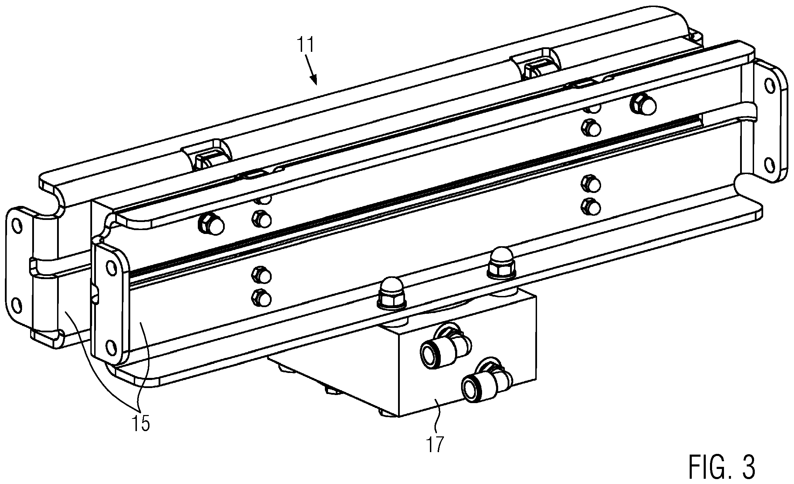

Fig. 3 zeigt die erste Klemmeinrichtung 11 der Reckstation 10 in isolierter Darstellung. Die erste Klemmeinrichtung 11 verfügt über einen Krafterzeuger 17, der in Form eines pneumatischen Antriebs vorliegt.

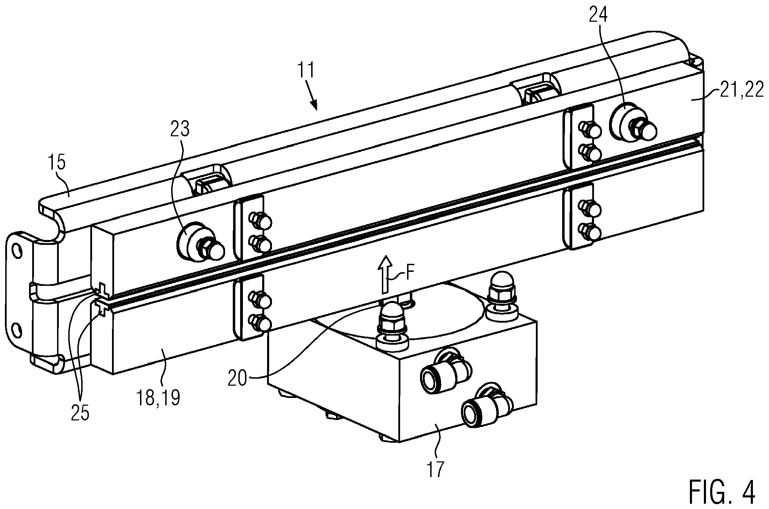

Fig. 4 zeigt, dass der Krafterzeuger 17 der ersten Klemmeinrichtung 11 mit einem ersten Klemmelement 18 gekoppelt ist. Das erste Klemmelement 18 liegt in Form eines ersten Balkens 19 vor, der mittels des Krafterzeugers 17 höhenverstellbar ist. Der Krafterzeuger 17 umfasst einen beweglich gelagerten Kolben 20, der im Wesentlichen mittig an einer Unterseite des ersten Balkens 19 befestigt ist und diesen von unten in Richtung eines darüber positionierten zweiten Klemmelements 21 anheben kann. Das zweite Klemmelement 21 liegt in Form eines zweiten Balkens 22 vor.

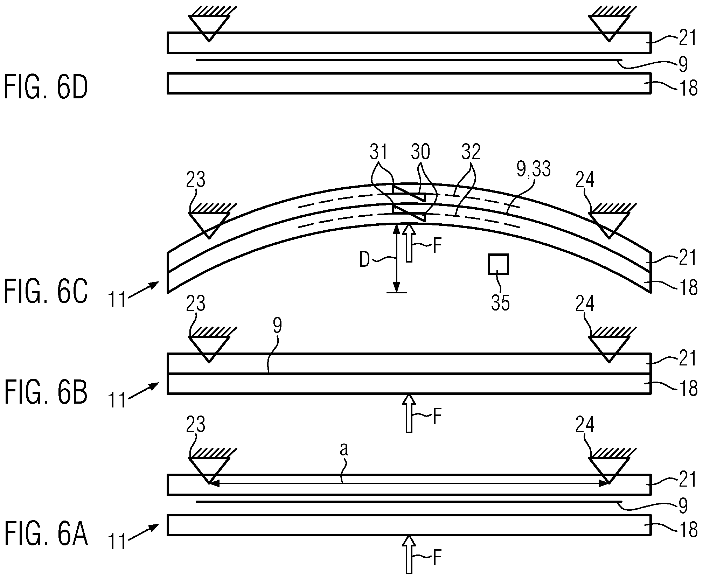

Das zweite Klemmelement 21 weist einen ersten Lagerort 23 und einen zweiten Lagerort 24 auf. Eine mittels des Krafterzeugers 17 über dessen aus- und einfahrbaren Kolben 20 erzeugte Kraft F, die auf das erste Klemmelement 18 wirkt, wird daran hinsichtlich eines Abstands a (siehe Fig. 6A) zwischen dem ersten und dem zweiten Lagerort 23, 24 des zweiten Klemmelements 21 im Wesentlichen mittig ausgeübt. Sobald die beiden Klemmelemente 18, 21 entlang deren Längsseiten auf Kontakt aneinanderliegen, beginnen beide sich bei anhaltender Kraft F gemeinsam nach oben durchzubiegen.

Ferner zeigt Fig. 4, dass die beiden Klemmelemente 18, 21 zum Einklemmen der Folienbahn 9 auf ihren jeweiligen einander zugewandten Seiten mindestens ein elastisches Andrückelement 25 aufweisen. Das elastische Andrückelement 25 ist in Form eines Kunststoffprofils, beispielsweise als ausgehärtetes Silikonprofil, vorliegen.

Die in Fig. 4 gezeigte erste Klemmeinrichtung 11 könnte an der Reckstation 10 auch spiegelverkehrt, d.h. mit dem Krafterzeuger 17 oben positioniert, zum Einsatz kommen.

Die Fig. 5A bis 5E zeigen in schematischer Ansicht die Arbeitsweise der Reckstation 10 der Tiefziehverpackungsmaschine 1.

Fig. 5A zeigt, dass an der Reckstation 10 die zweite Klemmeinrichtung 14 mit einem ersten Klemmelement 25 und einem zweiten Klemmelement 26 ausgestattet ist, die im Wesentlichen eine Balkenform gemäß der beiden Klemmelemente 18, 21 der ersten Klemmeinrichtung 11 aufweisen.

In Fig. 5A sind die beiden Klemmeinrichtungen 11, 14 in einem geöffneten Zustand gelagert. Zwischen den beiden Klemmeinrichtungen 11, 14 sind eine Heizeinrichtung 27 und eine Kühleinrichtung 28 positioniert. Die Heizeinrichtung 27 und/oder die Kühleinrichtung 28 sind optional an der Reckstation 10 vorgesehen.

In Transportrichtung T der Folienbahn 9 ist stromabwärts der ersten Klemmeinrichtung 11 ein Druckmarkensensor 29 positioniert, der ein Druckbild auf der Folienbahn 9 erfassen kann.

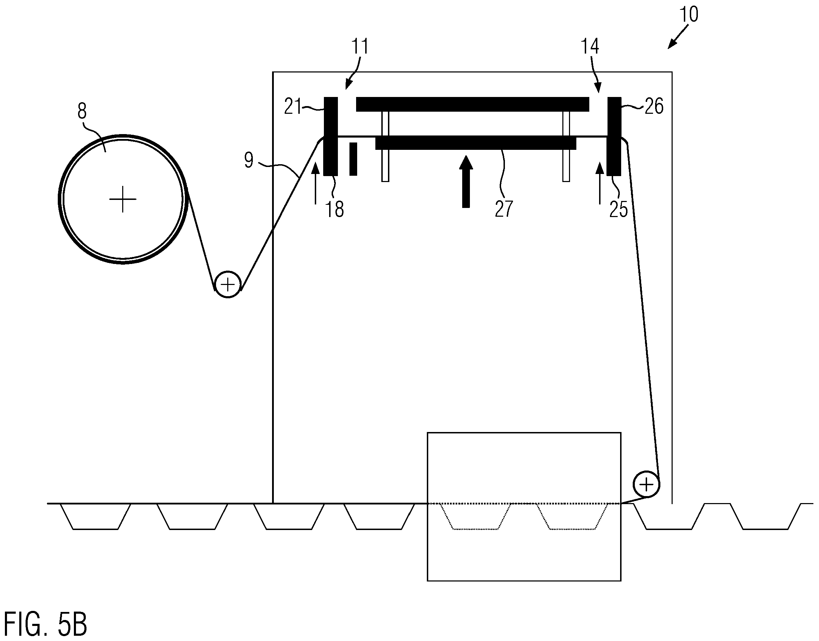

In Fig. 5B werden die beiden Klemmeinrichtungen 11, 14 geschlossen, um einen dazwischenliegenden Folienabschnitt der Folienbahn 9 einzuklemmen. Dafür werden die jeweiligen ersten Klemmelemente 18, 25 der ersten Klemmeinrichtung 11 und der zweiten Klemmeinrichtung 14 nach oben verstellt, was in Fig. 5B mittels Pfeilen angedeutet ist. Optional kann zusammen mit der Verstellbewegung der jeweiligen ersten Klemmelemente 18, 25 auch die Heizeinrichtung 27 nach oben in Richtung der Folienbahn 9 verstellt werden, um diese zu erwärmen.

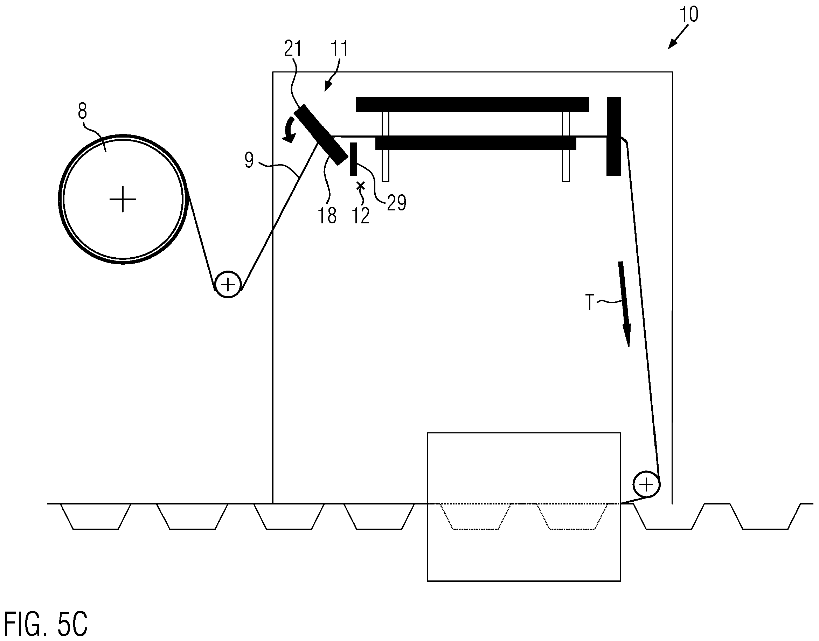

In Fig. 5C wird der eigentliche Reckvorgang an der Reckstation 10 schematisch dargestellt. Dafür wird die erste Klemmeinrichtung 11 um die Schwenkachse 12 entgegen der Transportrichtung T der Folienbahn 9 geschwenkt. Die Schwenkbewegung der ersten Klemmeinrichtung 11 führt dazu, dass die zwischen den beiden Klemmeinrichtungen 11, 14 eingespannte Folienbahn 9 geringfügig gedehnt wird, so dass sich das darauf befindliche Druckbild streckt. Die Schwenkbewegung kann gestoppt werden, sobald der Druckmarkensensor 29 das Druckbild auf der Folienbahn 9 erfasst.

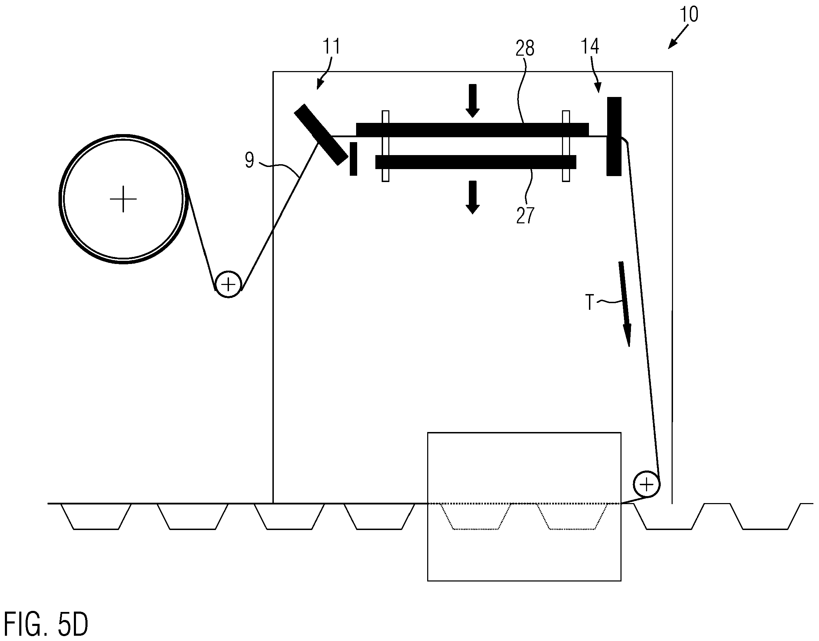

Fig. 5D zeigt, dass bei dem darin schematisch dargestellten Verfahrensschritt die erste Klemmeinrichtung 11 ausgeschwenkt bleibt, während die Kühlvorrichtung 28 nach unten in Richtung der darunter eingespannten Folienbahn 9 verfährt. Gleichzeitig wird die Heizeinrichtung 27 von der Folienbahn 9 weg nach unten abgesenkt. Durch das Abkühlen der gereckten Folienbahn 9 kann beim Weitertransport derselben eine Verzerrung des darauf befindlichen Druckbilds verhindert werden.

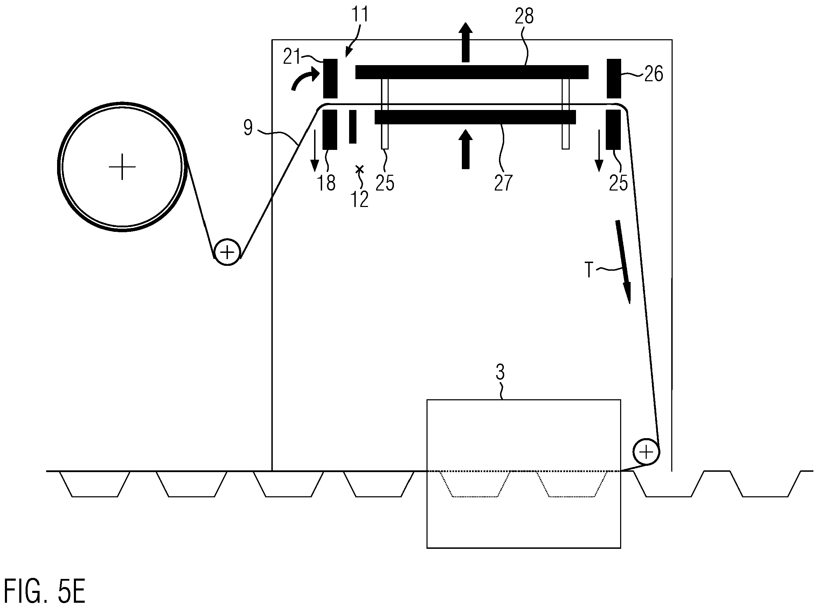

Fig. 5E zeigt das Öffnen der Reckstation 10, insbesondere das Öffnen der beiden daran vorgesehenen Klemmeinrichtungen 11, 14. Dafür werden die jeweils daran vorgesehenen ersten Klemmelemente 18, 25 in Pfeilrichtung abgesenkt. Diesem Vorgang vorausgehend oder gleichzeitig mit diesem kann ein Zurückschwenken der ersten Klemmeinrichtung 11 um die Schwenkachse 12 erfolgen. Die Heizeinrichtung 27 sowie die Kühlvorrichtung 28 werden dann ebenfalls beide von der Folienbahn 9 beabstandet.

Die Fig. 6A bis 6D zeigen in schematischer Darstellung das Einklemmen der Folienbahn 9 an der ersten Klemmeinrichtung 11.

In Fig. 6A ist die erste Klemmeinrichtung 11 in einem geöffneten Zustand gezeigt, der im Wesentlichen dem aus Fig. 5A entspricht. Fig. 6A zeigt, dass die Kraft F, welche mittels des Krafterzeugers 17 (siehe Fig. 4) erzeugt wird, um das erste Klemmelement 18 anzuheben, von unten an einer zentralen Stelle zwischen den beiden Lagerorten 23, 24 für das zweite Klemmelement 21 ansetzt, d.h. mittig hinsichtlich des Abstands a.

In Fig. 6B sind das erste Klemmelement 18 und das zweite Klemmelement 21 der ersten Klemmeinrichtung 11 sozusagen auf Kontakt aneinandergerückt dargestellt. Die Folienbahn 9 ist nun zwischen den beiden Klemmelementen 18, 21 eingespannt.

Fig. 6C zeigt nun, was passiert, wenn die mittels des Krafterzeugers 17 erzeugte Kraft F von unten weiter gegen das erste Klemmelement 18 drückt. Aufgrund der damit einhergehenden Durchbiegung D der beiden Klemmelemente 18, 21 treten sowohl im ersten Klemmelement 18 als auch im zweiten Klemmelement 21 Druck- und Zugspannungen 30, 31 im Wesentlichen gleichermaßen auf. Die Durchbiegung und/oder eine Biegespannung an den beiden Klemmelementen 18, 21 kann mittels einer Sensoreinheit 35 überwacht werden.

Aufgrund der zentralen Krafteinwirkung der Kraft F verteilen sich die jeweiligen Druck- und Zugspannungen 30, 31 hinsichtlich jeweiligen neutralen Fasern 32 der beiden Klemmelemente 18, 21 gleichmäßig auf die komplette Durchbiegung D. Daraus ergibt sich für den kompletten Klemmbereich 33, welcher sich entlang einer gesamten Breite der Folienbahn 9 erstreckt, eine konstante Flächenpressung. Dies ermöglicht eine verbesserte Fixierung der Folienbahn 9 für einen anschließend stattfindenden Reckvorgang an der Reckstation 10.

Fig. 6D zeigt die beiden Klemmelemente 18, 21 in deren Ausgangsposition gemäß Fig. 6A. Die beiden Klemmelemente 18, 21 sind nun wiederum beabstandet zueinander positioniert und geben die dazwischenliegende, nun jedoch gereckte Folienbahn 9 für einen Weitertransport in Transportrichtung T frei. Fig. 6D zeigt, dass sich die beiden Klemmelemente 18, 21 wieder in ihre ursprüngliche Form zurückgebogen haben.

Die Fig. 6A bis 6D verdeutlichen, wie die elastische Durchbiegung der beiden Klemmelemente 18, 21 für ein verbessertes Einklemmen der Folienbahn 9 mithilfe konstanter Flächenpressung ausgenutzt werden kann, damit ein Reckvorgang an der Reckstation 10 der Tiefziehverpackungsmaschine 1 mit erhöhter Genauigkeit durchführbar ist.

Obwohl die Fig. 5A bis 5E sowie die Fig. 6A bis 6D gezeigt haben, dass die Kraft F von unten auf die beiden übereinander positionierten Klemmelemente 18, 21 wirkt, kann alternativ an der Reckstation 10 eine Krafteinleitung auf die beiden Klemmelemente 18, 21 auch von oben erfolgen. Bei dieser Ausführung wäre das untere, erste Klemmelement 18 beidseitig gelagert, während die Kraft F von oben auf das zweite Klemmelement 21, das an einem darüber positionierten Krafterzeuger befestigt ist, einwirkt, so dass die beiden Klemmelemente 18, 21 nach unten durchgebogen werden.

## Patentansprüche

1. Tiefziehverpackungsmaschine (1), umfassend eine Reckstation (10) mit einer ersten Klemmeinrichtung (11) zum Einklemmen einer Folienbahn (9), wobei die erste Klemmeinrichtung (11) ein erstes Klemmelement (18) und ein zweites Klemmelement (21) aufweist, die zum Einklemmen der Folienbahn (9) entlang eines Klemmbereichs (33) aneinanderdrückbar gelagert sind, wobei beim Aneinanderdrücken der beiden Klemmelemente (18, 21) am ersten Klemmelement (18) derart eine Kraft (F) mittels eines Krafterzeugers (17) einleitbar und das zweite Klemmelement (21) derart gelagert ist, dass zumindest entlang des Klemmbereichs (33) zum Einklemmen der Folienbahn (9) sowohl im ersten als auch am zweiten Klemmelement (18, 21) Druck- und Zugspannungen (30, 31) auftreten, wobei
das erste Klemmelement (18) einen ersten Balken (19) und das zweite Klemmelement (21) einen zweiten Balken (22) umfasst, und
wobei beim Aneinanderdrücken der beiden Klemmelemente (18, 21) die dabei auf das erste Klemmelement (18) einwirkende Kraft (F) im Wesentlichen mittig hinsichtlich eines Abstands (a) zwischen einem ersten und einem zweiten Lagerort (23, 24) des zweiten Klemmelements (21) einleitbar ist,
**dadurch gekennzeichnet, dass** die beiden Klemmelemente (18, 21) zum Einklemmen der Folienbahn (9) auf ihren jeweiligen zugewandten Seiten mindestens ein elastisches Andrückelement (25), das in Form eines Kunststoffprofils vorliegt, aufweisen.

2. Tiefziehverpackungsmaschine nach Anspruch 1, **dadurch gekennzeichnet, dass** beim Aneinanderdrücken der beiden Klemmelemente (18, 21) zum Einklemmen der Folienbahn (9) beide Klemmelemente (18, 21) eine identische Durchbiegung (D) aufweisen.

3. Tiefziehverpackungsmaschine nach einem der vorangehenden Ansprüche, **dadurch gekennzeichnet, dass** an der Reckstation (10) das erste Klemmelement (18) unterhalb des zweiten Klemmelements (21) positioniert ist.

4. Tiefziehverpackungsmaschine nach einem der vorangehenden Ansprüche, **dadurch gekennzeichnet, dass** an der Tiefziehverpackungsmaschine mindestens eine Sensoreinheit (35) zum Bestimmen einer Biegespannung des ersten und/oder zweiten Klemmelements (18, 21) vorgesehen ist.

5. Tiefziehverpackungsmaschine nach einem der vorangehenden Ansprüche, **dadurch gekennzeichnet, dass** die Reckstation (10) eine mit der ersten Klemmeinrichtung (11) zusammenarbeitende, zweite Klemmeinrichtung (14) aufweist, deren Aufbau und/oder Funktionsweise zum Einklemmen der Folienbahn (9) gleich sind.

6. Tiefziehverpackungsmaschine nach einem der vorangehenden Ansprüche, **dadurch gekennzeichnet, dass** die erste und/oder die zweite Klemmeinrichtung (11, 14) für einen Reckvorgang um eine Schwenkachse (12) kippbar gelagert ist, die zu den jeweiligen Klemmelementen (18, 21, 25, 26) beabstandet ist.

7. Tiefziehverpackungsmaschine nach einem der vorangehenden Ansprüche, **dadurch gekennzeichnet, dass** die beiden Klemmelemente (18, 21, 25, 26) eine identische Balkengeometrie aufweisen.

8. Tiefziehverpackungsmaschine nach einem der vorangehenden Ansprüche, **dadurch gekennzeichnet, dass** die beiden Klemmelemente (18, 21, 25, 26) dasselbe E-Modul haben.

## Claims

1. A thermoforming packaging machine (1) comprising a stretching station (10) with a first clamping device (11) for clamping a film web (9), the first clamping device (11) comprising a first clamping element (18) and a second clamping element (21) that are mounted so as to be pressable against one another along a clamping region (33) for clamping the film web (9), wherein, when the two clamping elements (18, 21) are pressed against one another, a force (F) is allowed to be introduced at the first clamping element (18) by means of a force generator (17) and the second clamping element (21) is mounted such that compressive and tensile stresses (30, 31) occur at least along the clamping region (33) for clamping the film web (9) both in the first and at the second clamping elements (18, 21), wherein
the first clamping element (18) comprises a first beam (19) and the second clamping element (21) comprises a second beam (22), and
wherein, when the two clamping elements (18, 21) are pressed against each other, the force (F) thereby acting on the first clamping element (18) is introducible substantially centrally with respect to a distance (a) between a first and a second bearing location (23, 24) of the second clamping element (21),
**characterised in that** the two clamping elements (18, 21) for clamping the film web (9) have on their respective facing sides at least one elastic pressure element (25) that is in the form of a plastic profile.

2. A thermoforming packaging machine according to claim 1, **characterised in that** when the two clamping elements (18, 21) for clamping the film web (9) are pressed against each other, both clamping elements (18, 21) have an identical deflection (D).

3. A thermoforming packaging machine according to any one of the preceding claims, **characterised in that** at the stretching station (10) the first clamping element (18) is positioned below the second clamping element (21).

4. A thermoforming packaging machine according to any one of the preceding claims, **characterised in that** at least one sensor unit (35) is provided on the thermoforming packaging machine for determining a deflection angle of the first and/or the second clamping elements (18, 21).

5. A thermoforming packaging machine according to any one of the preceding claims, **characterised in that** the stretching station (10) has a second clamping device (14) that cooperates with the first clamping device (11), the structure and/or mode of operation for clamping the film web (9) of the clamping devices being identical.

6. A thermoforming packaging machine according to any one of the preceding claims, **characterised in that** the first and/or the second clamping devices (11, 14) for a stretching operation are mounted tiltably about a pivot axis (12) that is spaced apart from the respective clamping elements (18, 21, 25, 26).

7. A thermoforming packaging machine according to any one of the preceding claims, **characterised in that** the two clamping elements (18, 21, 25, 26) have an identical beam geometry.

8. A thermoforming packaging machine according to any one of the preceding claims, **characterised in that** the two clamping elements (18, 21, 25, 26) have the same modulus of elasticity.

## Revendications

1. Machine d'emballage par thermoformage (1), comprenant un poste d'étirage (10) avec un premier dispositif de serrage (11) pour serrer une bande de film (9), le premier dispositif de serrage (11) présentant un premier élément de serrage (18) et un deuxième élément de serrage (21) qui sont montés de manière à pouvoir être pressés l'un contre l'autre le long d'une zone de serrage (33) pour serrer la bande de film (9), où, lors de la pression des deux éléments de serrage (18, 21) l'un contre l'autre, une force (F) peut être introduite sur le premier élément de serrage (18) au moyen d'un générateur de force (17) et le deuxième élément de serrage (21) est monté de telle sorte qu'au moins le long de la zone de serrage (33) pour le serrage de la bande de film (9), des contraintes de compression et de traction (30, 31) apparaissent aussi bien dans le premier que dans le deuxième élément de serrage (18, 21), où
le premier élément de serrage (18) comprend une première barre (19) et le deuxième élément de serrage (21) comprend une deuxième barre (22), et
dans laquelle, lors de la pression des deux éléments de serrage (18, 21) l'un contre l'autre, la force (F) agissant alors sur le premier élément de serrage (18) peut être introduite sensiblement au centre par rapport à une distance (a) entre un premier et un deuxième emplacement (23, 24) du deuxième élément de serrage (21),
**caractérisé en ce que** les deux éléments de serrage (18, 21) destinés à serrer la bande de film (9) présentent sur leurs côtés respectifs au moins un élément de pression élastique (25) qui se présente sous la forme d'un profilé en matière plastique.

2. Machine d'emballage par thermoformage selon la revendication 1, **caractérisée en ce que,** lors de la pression des deux éléments de serrage (18, 21) l'un contre l'autre pour serrer la bande de film (9), les deux éléments de serrage (18, 21) présentent une flexion identique (D).

3. Machine d'emballage par thermoformage selon l'une des revendications précédentes, **caractérisée en ce que,** au niveau du poste d'étirage (10), le premier élément de serrage (18) est positionné en dessous du deuxième élément de serrage (21).

4. Machine d'emballage par thermoformage selon l'une des revendications précédentes, **caractérisée en ce qu'**il est prévu sur la machine d'emballage par thermoformage au moins une unité de détection (35) pour déterminer une tension de flexion du premier et/ou du deuxième élément de serrage (18, 21).

5. Machine d'emballage par thermoformage selon l'une des revendications précédentes, **caractérisée en ce que** le poste d'étirage (10) présente un deuxième dispositif de serrage (14) coopérant avec le premier dispositif de serrage (11), dont la structure et/ou le mode de fonctionnement pour le serrage de la bande de film (9) sont identiques.

6. Machine d'emballage par thermoformage selon l'une des revendications précédentes, **caractérisée en ce que** le premier et/ou le deuxième dispositif de serrage (11, 14) est monté de manière à pouvoir basculer autour d'un axe de pivotement (12) pour un processus d'étirage, lequel est espacé des éléments de serrage respectifs (18, 21, 25, 26).

7. Machine d'emballage par thermoformage selon l'une des revendications précédentes, **caractérisée en ce que** les deux éléments de serrage (18, 21, 25, 26) présentent une géométrie de barres identique.

8. Machine d'emballage par thermoformage selon l'une des revendications précédentes, **caractérisée en ce que** les deux éléments de serrage (18, 21, 25, 26) ont le même module d'élasticité.
